# EUROPEAN PATENT SPECIFICATION

(11) **EP 2 486 613 B1**
(45) Date of publication and mention of the grant of the patent: **01.05.2019**
(21) Application number: 09850171.1
(22) Date of filing: 07.10.2009
(51) Int. Cl.: H01M 2/20, H01M 2/26, H01M 10/04, H01M 10/42, H01M 10/058

(54) **LOW NOISE BATTERY**
RAUSCHARME BATTERIE
BATTERIE À FAIBLE BRUIT

(43) Date of publication of application: 15.08.2012
(73) Proprietor: BlackBerry Limited, Waterloo, ON N2K 0A7 (CA)
(72) Inventor: BODA, Mallikarjun, Waterloo, Ontario N2L 3W8 (CA); VAN SHYNDEL, Andre John, Kanata, Ontario K2K 3K1 (CA)
(74) Representative: Bryn-Jacobsen, Caelia
(86) International application number: PCT/CA2009/001395
(87) International publication number: WO 2011/041867

(56) References cited:
- GB-A- 884 262
- JP-A- 2000 348 757
- JP-A- 2001 338 686
- JP-A- 2007 220 372
- US-A- 5 230 967
- US-A1- 2007 269 685
- US-B1- 6 307 151
- US-B2- 7 280 808

## Description

### TECHNICAL FIELD

The present disclosure relates to batteries. Still more particularly, the present disclosure relates to a method and apparatus for a battery having low magnetic interference.

### BACKGROUND

Mobile communication devices are popular for business and personal use. Such devices include Personal Digital Assistants (PDA), cellular phones, mobile phones, smart phones, and computers. These mobile devices provide wireless two-way voice and data communication over wireless networks. The wireless networks may be, but are not limited to, GSM/GPRS, CDPD, TDMA, CDMA, iDEN Mobitex, DataTAC, EDGE, EV-DO, UMTS, Bluetooth, variants of 802.11, and other wireless networks.

Magnetic fields are generated by electronic devices. The magnetic fields may interfere with other nearby electronic devices. The international standards on Hearing Aid Compatibility (HAC) establish a minimum signal-to-noise ratio at the T-coil of a hearing aid for effective magnetic wireless coupling to the hearing aid, (including cochlear implants, and assistive listening devices), while minimizing magnetic interference. Traditional approaches to meet the required signal-to-noise ratio in the presence of magnetic fields generated by mobile communication devices include increasing current to the receiver in the mobile communication device, installing a separate T-coil within the mobile communication device to increase the signal, and altering current loops and circuit board traces within the mobile communication device to reduce the noise from magnetic interference.

Therefore, it would be illustrative to have a method and apparatus that takes into account at least some of the issues discussed above, as well as possibly other issues.

US 2007/269685 relates to a compact, robust, multifunctional and highly manufacturable rechargeable cylindrical electrochemical cell. In some embodiments, a cell can include a spirally wound assembly having an anode sheet and a cathode sheet separated by separator membranes, each sheet having a electroactive layer on a current collector. At least one of the current collectors can be in electrical communication with conducting tabs that extend from at least one of the anode sheet and the cathode sheet, the conducting tabs extends from an end face of the spirally wound assembly. The centers of the plurality of conducting tabs can be located within a 90 degree quadrant of an end face of the spirally wound assembly.

JP 2007 220372 relates to a battery capable of lowering a parasitic inductance. In a power generator element laminating many bipolar electrodes, positive electrodes are formed on one side of a current collector; negative electrodes are formed on the other side; and many electrolyte layers alternately has a positive electrode side terminal electrode connected with a positive electrode side current collector electrode, and a negative electrode side terminal electrode connected with a negative electrode side current collector electrode. The current flows in the opposite direction at the positive electrode side current collector electrode, and the negative electrode side current collector electrode.; Such an opposite direction current flowing through the positive electrode side current collector electrode and the negative electrode side current collector electrode cancels magnetic fields, thereby making it possible to lower the inductance when a battery itself is seen as a current path through which a current is flowing.

GB 884262 relates to the connection members of a storage battery so arranged as to minimize the external magnetic field set up when current is taken from the battery.

The present invention is set out in the independent claims, with some optional features set out in the claims dependent thereto.

### BRIEF DESCRIPTION OF THE DRAWINGS

For a better understanding of the various embodiments described herein, and to show more clearly how they may be carried into effect, reference will now be made, by way of example only, to the accompanying drawings which show at least one exemplary embodiment and in which:
FIG. 1 is a block diagram of an exemplary embodiment of a mobile device;
FIG. 2 is a block diagram illustrating a battery in accordance with an illustrative embodiment;
FIG. 3 is a perspective view of a conventional battery in accordance with an illustrative embodiment;
FIG. 4 is a schematic representation of a final layer of a battery jellyroll with a positive conductor and a negative conductor routed to contact pads of the battery in accordance with an illustrative embodiment;
FIG. 5 is a schematic representation of a final layer of a battery jellyroll with a positive conductor and a negative conductor with an insulator in accordance with an illustrative embodiment;
FIG. 6 is a schematic representation of a final layer of a battery jellyroll with a positive conductor and a negative conductor with an insulator in accordance with an illustrative embodiment; and
FIG. 7 is a flowchart of a process for transmitting electricity in accordance with an illustrative embodiment.

### DETAILED DESCRIPTION

Noise in a battery may be caused by the tabs or conductors being attached on different sides of the electrodes, the tabs or conductors being asymmetric, having case connections at different locations inside and outside of the case, and external wiring routed without matching opposite currents. Electronic noise may be a random signal characteristic of all electronic circuits. Electronic noise may be caused by, but not limited to, equilibrium fluctuations of the electric current inside an electrical conductor and/or random fluctuations of the electric current in an electrical conductor.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures, and components have not been described in detail so as not to obscure the embodiments described herein. Also, the description is not to be considered as limiting the scope of the embodiments described herein.

The embodiments described herein generally relate to a wireless mobile communication device, sometimes referred to hereinafter as "user equipment." The user equipment is a two-way communication device with advanced data communication capabilities including the capability to communicate with other user equipments or computer systems through a network of transceiver stations. The user equipment may also have the capability to allow voice communication. Depending on the functionality provided by the user equipment, it may be referred to as a data messaging device, a two-way pager, a cellular telephone with data messaging capabilities, a wireless Internet appliance, or a data communication device. This data messaging device may or may not have telephony capabilities.

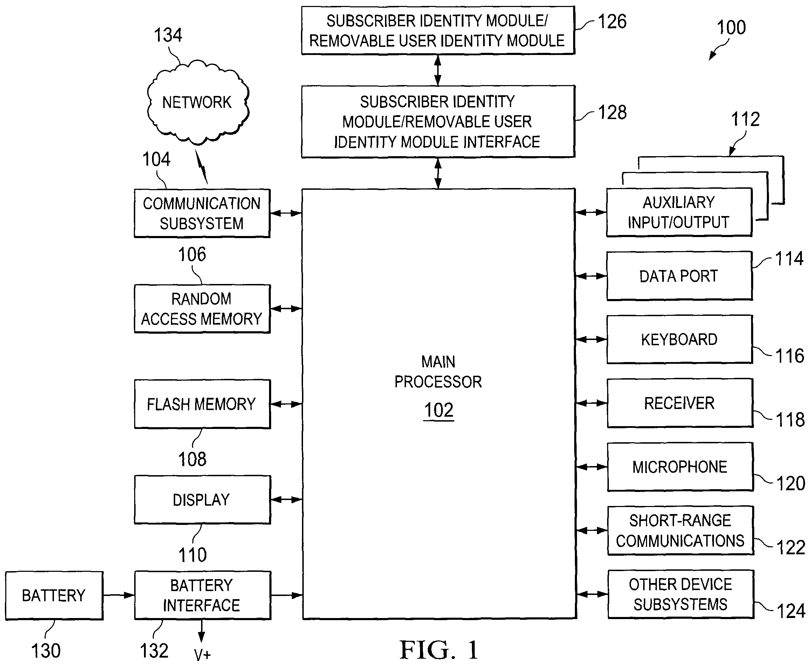

Turning to FIG. 1, a block diagram of an exemplary embodiment of user equipment 100 is depicted in accordance with an illustrative embodiment. User equipment 100 includes one or more components such as main processor 102; communication subsystem 104 that receives messages from, and sends messages to, wireless network 134; Random Access Memory (RAM) 106; flash memory 108; display 110; auxiliary input/output (I/O) subsystem 112; data port 114; keyboard 116; receiver 118; microphone 120; subscriber identity module/removable user identity module card 126; and subscriber identity module/removable user identity module interface 128; short-range communications 122; other device subsystems 124.

User equipment 100 is a battery-powered device and includes battery interface 132 for receiving at least one battery 130 which may be rechargeable. In at least some embodiments, battery 130 can be a smart battery with an embedded microprocessor. Battery interface 132 is coupled to a regulator (not shown), which assists battery 130 in providing power V+ to user equipment 100. Although current technology makes use of a battery, future technologies such as micro fuel cells may provide the power to user equipment 100.

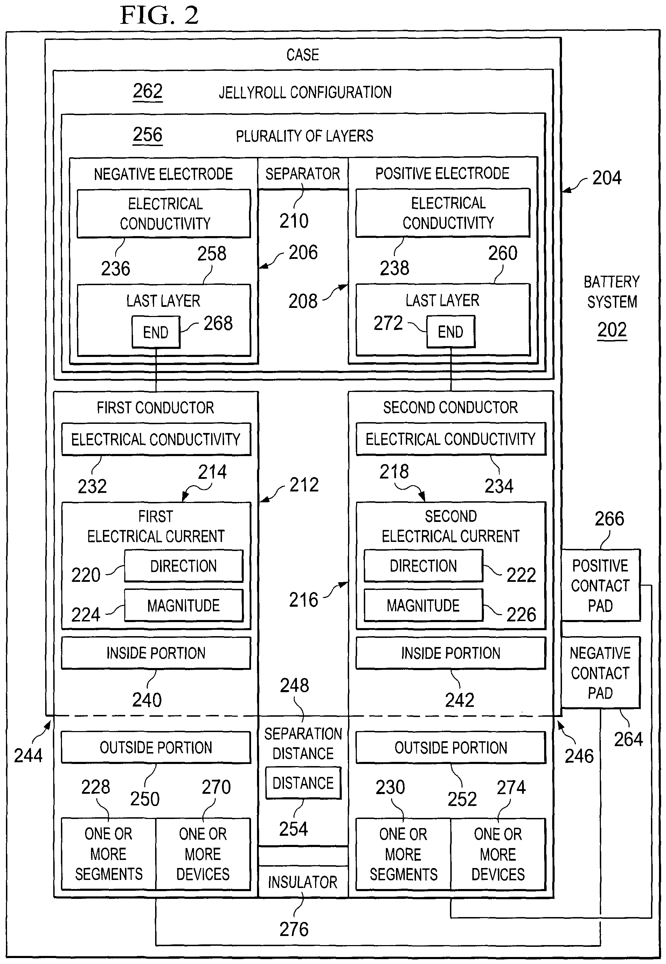

Turning now to FIG. 2, a block diagram of a battery is depicted in accordance with an illustrative embodiment. Battery system 202 may be one implementation of battery 130 of FIG. 1 for user equipment, such as user equipment 100 of FIG. 1. Battery system 202 comprises case 204. On the outside of case 204 is negative contact pad 264 and positive contact pad 266. Negative contact pad 264 and positive contact pad 266 may be used to provide power to the rest of the components in the user equipment. Negative contact pad 264 and Positive contact pad 266 may be connected to, be a part of, or be an extension of, first conductor 212 and second conductor 216, respectively.

Case 204 contains jellyroll configuration 262, and inside portions 240 and 242 of first conductor 212 and second conductor 216, respectively. Jellyroll configuration 262 comprises coated metallic films, such as plurality of layers 256, which are rolled up and flattened. Also referred to as a "jellyroll" electrode assembly. An electrode may be an electrical conductor used to make contact with a nonmetallic part of a circuit, for example, a semiconductor, an electrolyte, and/or a vacuum. The coated metallic films of jellyroll configuration 262 may be electrodes. In different embodiments, case 204 may comprise a stacked configuration, folded back and forth like an accordion, referred to as a Z-type electrode assembly, instead of a jellyroll configuration. Reference will be made hereinafter to the construction and design of "jellyroll" electrode assemblies; although a person of skill in the art will appreciate that the principles set forth herein apply equally to other designs and configurations of electrode assemblies.

Jellyroll configuration 262 may comprise plurality of layers 256. Plurality of layers 256 may comprise negative electrode 206, separator 210, and positive electrode 208. Separator 210 comprises electrolyte. Ions in battery system 202 flow through electrolyte. In different illustrative embodiments, separator 210 may comprise one or more layers of electrolyte in between negative electrode 206 and positive electrode 208. In different embodiments, separator 210 may also comprise one or more layers in on the other side of negative electrode 206 and/or positive electrode 208.

Separator 210 contains an electrolyte, such as lithium salts, such as LiPF6, LiBF4, or LiClO4, in an organic solvent, such as ether. The electrolyte may also be acid such as in a lead-acid battery, alkaline electrolyte usually potassium hydroxide in a nickel metal hydride or nickel cadmium. Positive electrode 208 may comprise a thin sheet of aluminum (e.g. 15µm) that is coated on both sides (e.g. 60-70µm per side) with Lithium cobalt oxide (LiCoO2), or other suitable material, while negative electrode 206 may comprise a thin sheet of copper foil (e.g. 10µm) that is coated on both sides with graphite (e.g. 60-70µm per side), such that electrical current flows from positive electrode 208 to negative electrode 206. Separator 210 has openings in it that allow the electrolyte liquid to permeate between positive electrode 208 and negative electrode 206. Separator 210 thus physically separates the two electrode sheets while allowing ions to flow between them. Separator 210 may have a thickness of about 20 µm. However, in different embodiments, separator 210 may have other thicknesses.

The different embodiments recognize that sources of magnetic noise in batteries, such as battery system 202, include noise from the electric currents, such as first currents flowing in the jellyroll configuration 262, ion currents in the electrolyte liquid, currents flowing in the inside portions 240 and 242 of conductors 212 and 216 from negative electrode 206 and positive electrode 208 to negative feed-through 244 and to positive feed-through 246, currents flowing in case 204, and currents flowing in the outside portions 250 and 252 of conductors 212 and 216.

Negative electrode 206 comprises electrical conductivity 236 and last layer 258. Electrical conductivity 236 is the measure of an object's or circuit's ability to conduct an electric current between two points. Electrical conductivity 236 may depend on the material and shape of the object. Last layer 258 is the last layer in jellyroll configuration 262, and is an outside layer on jellyroll configuration 262. Last layer 258 comprises end 268. End 268 may be any end of last layer 258. End 268 may be perpendicular or horizontal to an axis of the roll of jellyroll configuration 262. End 268 may be the edge of last layer 258 or may be a portion of last layer 258 leading up to an edge of last layer 258. For example, end 268 may be 5 millimeters leading up to an edge of last layer 258. End 268 may be more or less than 5 millimeters.

Positive electrode 208 comprises electrical conductivity 238 and last layer 260. Last layer 260 is the last layer in jellyroll configuration 262, and has an outside layer on jellyroll configuration 262. Last layer 260 comprises end 272. End 272 may be any end of last layer 260. End 272 may be perpendicular or horizontal to an axis of the roll of jellyroll configuration 262. End 272 may be the edge of last layer 260 or may be a portion of last layer 260 leading up to an edge of last layer 260. For example, end 272 may be 5 millimeters leading up to an edge of last layer 260. End 272 may be more or less than 5 millimeters.

First conductor 212 is a conductor connected to negative electrode 206 along end 268. First conductor 212 is also connected to negative contact pad 264. First conductor 212 comprises electrical conductivity 232, first electrical current 214, inside portion 240, and outside portion 250. Electrical conductivity 232 of first conductor 212 is higher than electrical conductivity 236 of negative electrode 206, allowing electrical currents, such as first electrical current 214, to collect in first conductor 212. Electrical currents flow more easily in higher conductive materials. The material of first conductor 212 may be more conductive than the material of negative electrode 206.

First electrical current 214 comprises direction 220 and magnitude 224. An electrical current is the flow of electron charge. Direction 220 is the direction of the electrical current 214 and magnitude 224 is the magnitude of electrical current 214. First electrical current 214 causes a magnetic field. A positive current will result in the opposite magnetic field as that of a negative current flowing in the same direction. Also, a positive current will result in the opposite magnetic field as a positive current flowing in an opposite direction.

Inside portion 240 comprises the portion of first conductor 212 that remains inside of case 204. Outside portion 250 comprises the portion of first conductor 212 that remains outside of case 204.

Second conductor 216 is a conductor connected to positive electrode 208 along end 272. Second conductor 216 is also connected to positive contact pad 266. Second conductor 216 comprises electrical conductivity 234, second electrical current 218, inside portion 242, and outside portion 252. Electrical conductivity 234 of second conductor 216 is higher than electrical conductivity 238 of positive electrode 208, allowing electrical currents, such as second electrical current 218, to collect in second conductor 216. The material of second conductor 216 may be more conductive than the material of positive electrode 208. Also, while it appears in FIG. 2 that first conductor 212 and second conductor 216 are both connected to case 204, it is recognized that only one conductor may be physically touching or connected to case 204 at any given time.

Second electrical current 218 comprises direction 222 and magnitude 226. An electrical current is the flow of an electron charge. Direction 222 is the direction of the electrical current 218 and magnitude 226 is the magnitude of electrical current 218. Second electrical current 218 causes a magnetic field.

Inside portion 242 comprises the portion of second conductor 216 that remains inside of case 204. Outside portion 252 comprises the portion of second conductor 216 that remains outside of case 204.

Negative feed-through 244 and positive feed-through 246 are the portions of case 204 where first conductor 212 and second conductor 216 exit case 204, respectively. Negative feed-through 244 and positive feed-through 246 are separated by separation distance 248. Separation distance may be any distance 254.

First conductor 212 and second conductor 216 may have about 10 times the conductivity than the positive electrode 208 and negative electrode 206. The increase in conductivity may be achieved because the first conductor 212 and second conductor 216 are about 10 times or more thicker than the first and second electrodes. The positive electrode 208 and negative electrode 206 are typically only 10 microns thick.

The illustration of battery system 202 in FIG. 2 is not meant to imply physical or architectural limitations to the manner in which different illustrative embodiments may be implemented. Other components in addition to, and/or in place of, the ones illustrated may be used. Some components may be unnecessary in some illustrative embodiments. Also, the blocks are presented to illustrate some functional components. One or more of these blocks may be combined and/or divided into different blocks when implemented in different illustrative embodiments.

Additionally, negative contact pad 264 and positive contact pad 266 may not be the only types of contact pads. For example, there may also be a temperature contact pad and a cryptography contact pad as well as other types of pads. Also, there may be more layers in plurality of layers 256. For example, there may be a second positive electrode, a second negative electrode and a second separator. The second set of electrodes and separator may be rolled up with the first layer, positive electrode 208, separator 210, and negative electrode 206.

Additionally, first conductor 212 comprises one or more devices 270. One or more devices 270 may comprise different components that manipulate the flow of current in first conductor 212. For example, one or more devices 270 may comprise switches, such as, but not limited to, a transistor, a field effect transistor, a metal-oxide semiconductor field effect transistor, a resettable fuse, a non-resettable fuse, a resettable thermal fuse, and/or a non-resettable thermal fuse. One or more devices 270 may divide first conductor 212 into one or more segments 228. One or more devices 270 may receive power from the current running through first conductor 212 and/or through some other power source. One or more devices 270 may close a connection between the different one or more segments 228 of first conductor 212 in response to a certain condition. For example, a metal-oxide semiconductor field effect transistor may be designed to block the flow of current if the voltage is too high or too low.

Additionally, second conductor 216 comprises one or more devices 274. One or more devices 274 may comprise different components that manipulate the flow of current in second conductor 216. For example, one or more devices 274 may comprise switches, such as, but not limited to, a transistor, a field effect transistor, a metal-oxide semiconductor field effect transistor, a resettable fuse, a non-resettable fuse, a resettable thermal fuse, and/or a non-resettable thermal fuse. One or more devices 274 may divide second conductor 216 into one or more segments 230. One or more devices 274 may receive power from the current running through second conductor 216 and/or through some other power source. One or more devices 274 may close a connection between the different one or more segments 230 of second conductor 216 in response to a certain condition. For example, a metal-oxide semiconductor field effect transistor may be designed to block the flow of current if the voltage is too high or too low.

Battery system 202 may comprise insulator 276. Insulator 276 is a material which would not conduct an electric current or would conduct only a nominal electrical current. Insulator 276 may be or form part of a printed wiring board or a printed circuit board. Insulator 276 may be less than 2 millimeters thick, such as, for example 0.5 millimeters thick. In different illustrative embodiments, first conductor 212, second conductor 216, or both, may be partially located on insulator 276.

One or more illustrative embodiments include one or more devices, such as switches, on the conductors of a battery because the switches may manipulate the current under certain circumstances. For example, if the voltage in the battery becomes too high or too low, damage may occur in the battery; under these circumstances a transistor or switch may stop the flow of current to different segments of a conductor.

One or more illustrative embodiments also have at least some portions of at least one of the conductors located on an insulator, such as a printed wiring board, because an insulator allows for more convenient placement of devices.

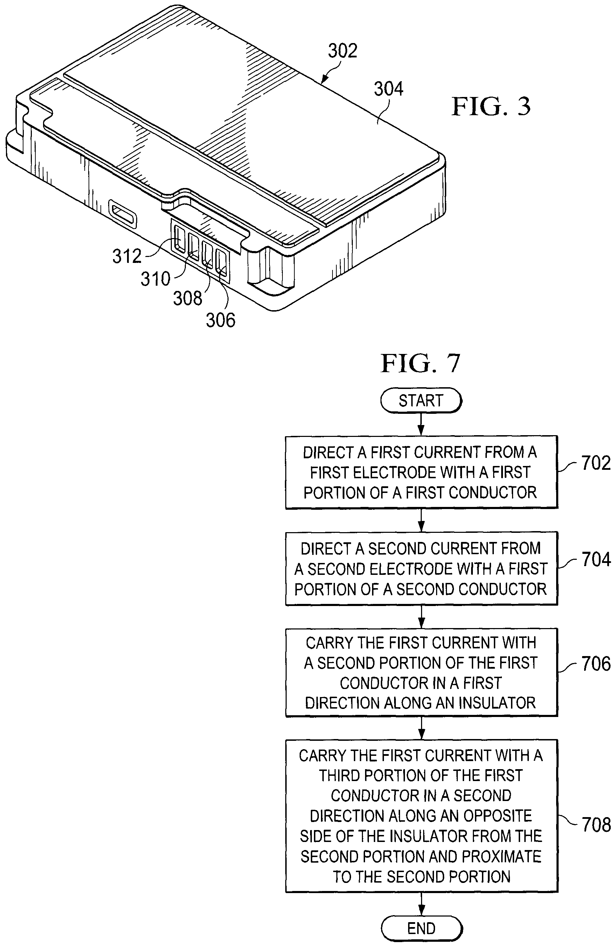

Turning now to FIG. 3, a battery for powering user equipment is depicted in accordance with an illustrative embodiment. Battery 302 is an example of one implementation of battery system 202 in FIG. 2. In this illustrative example, battery 302 includes an electrode assembly assembled inside case 304 and includes positive contact pad 306, negative contact pad 312, temperature contact pad 310, and cryptography contact pad 308 for testing manufacturer's authenticity of battery 302. Case 304 may be one implementation of case 204 of FIG. 2.

In different embodiments, the pads may be in a different order or location. Additionally, some pads may not be on the case, such as cryptography contact pad 308. In other embodiments, other types of pads may be used. Battery 302 may include an internal microprocessor and a switch in series with positive contact pad 306 and negative contact pad 312 which is opened by the internal microprocessor if battery 302 discharges below a predetermined level, in order to avoid damage to the battery. Likewise, if the battery temperature elevates beyond a predetermined level, as indicated on temperature contact pad 310, the microprocessor may cause the switch to open.

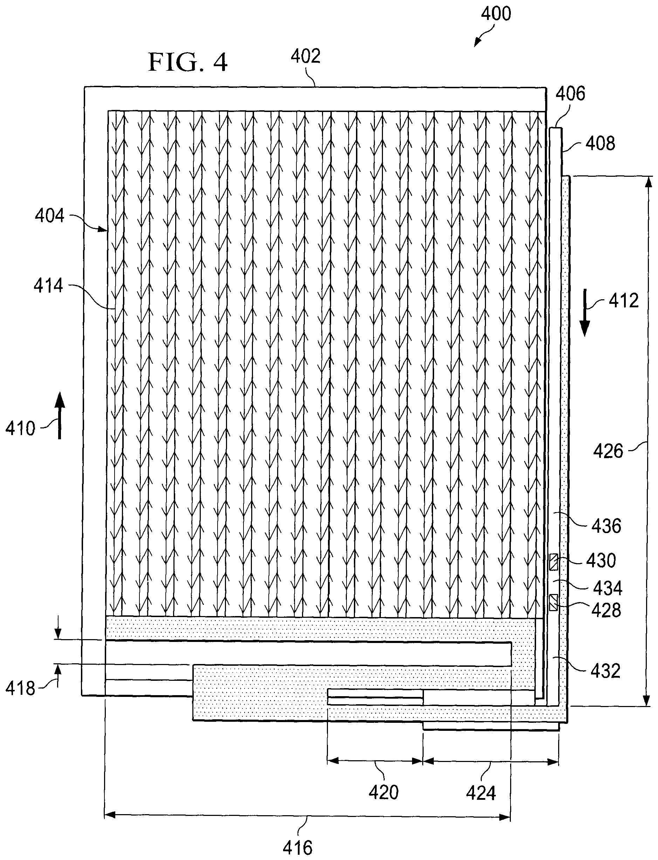

Turning now to FIG. 4, a schematic representation of a final layer of a battery jellyroll with a positive conductor and a negative conductor routed to contact pads is depicted in accordance with an illustrative embodiment. Battery 400 is an example of one implementation of battery system 202 in FIG. 2.

In this illustrative example, battery 400 comprises case 402, a jellyroll layer 404, positive conductor 406, and negative conductor 408. Case 402 comprises a jellyroll with layer 404. Layer 404 is the last layer of a jellyroll. While it appears in FIG. 4 that layer 404 is a single layer, it is recognized that layer 404 may be representative of a plurality of layers, such as plurality of layers 256 of FIG. 2. The plurality of layers may comprise a positive electrode, negative electrode, and a separator. Additionally, while it appears in FIG. 4 that negative conductor 408 and positive conductor 406 are both connected to a single layer, it is recognized that negative conductor 408 and positive conductor 406 are connected to different layers. For example, positive conductor 406 may be connected to a positive electrode of layer 404.

Also, while it appears in FIG. 4 that negative conductor 408 and positive conductor 406 are side by side, it is recognized that negative conductor 408 and positive conductor 406 are overlapping. This presentation is shown for purposes of clarity in describing an illustrative embodiment. Also, while layer 404 appears to be a single rectangle, it is recognized that the portion furthest from first portion 416 and at the top of the figure would wrap around underneath to form the rest of the jellyroll and the portion closest to first portion 416 and at the bottom of the figure stops and is the last part of the jellyroll. Here, the jellyroll would have a horizontal axis.

Layer 404 comprises electric currents 414. The positive currents of electric currents 414 may flow in the direction indicated by arrow 412 and the negative currents of electric currents 414 may flow in the direction indicated by arrow 410. Electric currents 414 are just one illustration of the flow of currents. Electric currents 414 may flow in other directions; for example, the positive and negative currents may flow in opposite directions. Layer 404 also comprises a plurality of layers. The plurality of layers may include, but are not limited to, a positive electrode, a separator, and a negative electrode. The positive currents and negative currents of electric currents 414 are in substantially opposite directions and substantially equal in magnitude throughout layer 404, which may also be referred to as electric currents 414 "matching", "substantially matching", being "substantially matched", or being "matched". Alternatively, positive or negative currents may be matched by themselves in an opposite direction. For example, a portion of a conductor with a negative current may be matched by a portion of the conductor in the opposite direction with the same negative current.

In these depicted examples, electric currents 414 are matched because negative conductor 408 and positive conductor 406 are symmetric across the negative and positive electrodes as negative conductor 408 and positive conductor 406 pull current from the positive and negative electrodes. The term "symmetric" is defined as being proximate to one another and similar in shape. When negative conductor 408 and positive conductor 406 are symmetric across the negative and positive electrodes, electric currents 414 in the electrodes are pulled evenly to the negative conductor 408 and positive conductor 406 to keep the positive and negative currents matching. In different embodiments, negative conductor 408 and positive conductor 406 may be extended across the entire length of an end of layer 404, extended across a different end, and/or only a portion of an end of layer 404. Negative conductor 408 is connected to the negative electrode of layer 404 and positive conductor 406 is connected to the positive electrode of layer 404. Since negative conductor 408 and positive conductor 406 are extended across the entire length of the end of layer 404, the positive and electric currents of electric currents 414 are pulled evenly vertical across layer 404.

The positive currents in positive conductor 406 and negative currents in negative conductor 408 are all substantially matched. In first portion 416, negative conductor 408 overlaps and is symmetric to positive conductor 406. Alternatively, positive conductor 406 may overlap negative conductor 408. Also, in second portion 418 and fifth portion 426, negative conductor 408 overlaps positive conductor 406. In first portion 416, second portion 418, and fifth portion 426, the positive currents in positive conductor 406 and negative currents in negative conductor 408 are in substantially opposite directions and substantially equal in magnitude and therefore matched. Second portion 418 receives the current from first portion 416 and directs the current to the rest of positive conductor 406 and negative conductor 408. In third portion 420, there are only negative currents in negative conductor 408 without any positive currents for the negative currents to match. Third portion 420 is along the separation distance between the positive feed-through and negative feed-through. The separation distance may be any distance. Additionally, the two portions of negative conductor 408 in third portion 420 may be separated by around 1 mm or less, with case 402 between the two portions. However, the negative currents match themselves since the current flowing through negative conductor 408 inside the case flowing in one direction and then proximately in the opposite direction through negative conductor 408 outside the case. Additionally, fourth portion 424 operates similarly to third portion 420. Positive currents inside of case 402 match themselves with positive currents outside of case 402. Additionally, first portion 416, second portion 418, the portion inside the case of third portion 420, and the portion inside the case of fourth portion 424 are all located on the end of layer 404. Since first portion 416 extends across the entire length of an end of layer 404, electric currents 414 from the positive and negative electrodes are not able to flow to third portion 420 and fourth portion 424. The different illustrative embodiments recognize that when currents are matched or substantially matched, magnetic fields surrounding the conductors and electrodes are reduced. When currents are matched as shown in FIG 4, the magnetic field surrounding battery 400 may be reduced by about 20-30dB. Additionally, positive conductor 406 comprises devices 428 and 430. Devices 428 and 430 may comprise different components that manipulate the flow of current in positive conductor 406. For example, devices 428 and 430 may comprise switches, such as, but not limited to, a transistor, a field effect transistor, a metal-oxide semiconductor field effect transistor, a resettable fuse, a non-resettable fuse, a resettable thermal fuse, and/or a non-resettable thermal fuse. Devices 428 and 430 may divide positive conductor 406 into segments 432, 434, and 436. Devices 428 and 430 may receive power from positive conductor 406, negative conductor 408 and/or through some other power source. Devices 428 and 430 may close a connection between the different segments 432, 434, and 436 of positive conductor 406 in response to a certain condition. For example, a metal-oxide semiconductor field effect transistor may be designed to block the flow of current if the voltage is too high or too low. It is understood that the functions of devices 428 and 430 may similarly operate on the negative conductor 408.

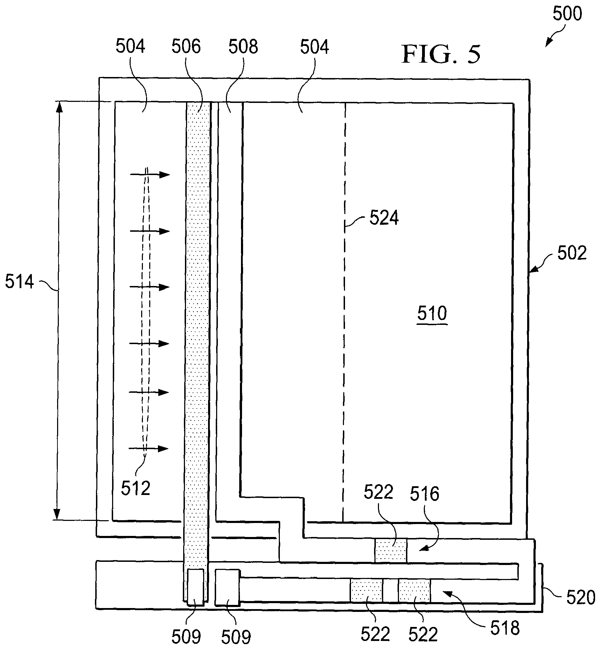

Turning now to FIG. 5, a schematic representation of a final layer of a battery jellyroll with a positive conductor and a negative conductor with an insulator is depicted in accordance with an illustrative embodiment. Battery 500 is an example of one implementation of battery system 202 in FIG. 2.

In this illustrative example, battery 500 comprises case 502, a jellyroll with layer 504, positive conductor 506, and negative conductor 508. Layer 504 is the last layer of a jellyroll. While it appears in FIG. 5 that layer 504 is a single layer, it is recognized that layer 504 may be representative of a plurality of layers, such as plurality of layers 256 of FIG. 2. The plurality of layers may comprise a positive electrode, negative electrode, and a separator. Additionally, while it appears in FIG. 5 that negative conductor 508 and positive conductor 506 are both connected to a single layer, it is recognized that negative conductor 508 and positive conductor 506 are connected to different layers. For example, positive conductor 506 may be connected to a positive electrode of layer 504. Positive conductor 506 and negative conductor 508 end at contact pads 509.

Also, while it appears in FIG. 5 that negative conductor 508 and positive conductor 506 are side by side, it is recognized that negative conductor 508 and positive conductor 506 may also overlap. Some embodiments maximize the symmetry and minimize the separation between positive conductor 506 and negative conductor 508 suggesting the overlap of conductors 506 and 508. This presentation is shown as an illustrative embodiment. Also, while layer 504 appears to be a single rectangle, it is recognized that the edge at the left of the figure would wrap around underneath to the left to form the rest of the jellyroll and ends to the right at end 524. Layer 510 is another layer and wraps around underneath to the right of the figure where it will eventually become layer 504. Layer 510 goes underneath layer 504 as it approaches end 524 to the left. Here, the jellyroll would have a vertical axis. The final layer can be in the middle of the jellyroll or at the outside edge.

Layer 504 comprises positive currents 512. Positive currents 512 are just one illustration of the flow of currents. Layer 504 also comprises a plurality of layers. The plurality of layers may include, but are not limited to, a positive electrode, a separator, and a negative electrode. Positive currents 512 and the negative currents are in substantially opposite directions and substantially equal in magnitude throughout layer 504, which may also be referred to as electric currents "matching", "substantially matching", being "substantially matched", or being "matched". Alternatively, positive currents 512 or negative currents may be matched by themselves in an opposite direction. For example, a portion of a conductor with a negative current may be matched by a portion of the conductor in the opposite direction with the same negative current.

In these depicted examples, electric currents are matched because negative conductor 508 and positive conductor 506 are substantially symmetric across the negative and positive electrodes as negative conductor 508 and positive conductor 506 pull current from the positive and negative electrodes. The term "symmetric" is defined as being proximate to one another and similar in shape. When negative conductor 508 and positive conductor 506 are symmetric across the negative and positive electrodes, electric currents in the electrodes are pulled evenly to the negative conductor 508 and positive conductor 506 to keep the positive and negative currents matching. In different embodiments, negative conductor 508 and positive conductor 506 may be extended across the entire length of an end of layer 504, extended across a different end, and/or only a portion of an end of layer 504. Negative conductor 508 is connected to the negative electrode of layer 504 and positive conductor 506 is connected to the positive electrode of layer 504. Since the leading edge of negative conductor 508 and positive conductor 506 are extended across the entire length of the end of layer 504, the positive and electric currents of electric currents are pulled evenly across layer 504.

The positive currents in positive conductor 506 and negative currents in negative conductor 508 are all substantially matched. In first portion 514, negative conductor 508 is substantially symmetric to positive conductor 506. In second portion 516, there are only negative currents in negative conductor 508 without any positive currents for the negative currents to match. Instead, the negative currents in second portion 516 are matched with the negative currents flowing in an opposite direction in third portion 518. Additionally, second portion 516 and third portion 518 of negative conductor 508 may be separated by around 2 mm or less, with insulator 520 between second portion 516 and third portion 518. Insulator 520 is a material which would not conduct an electric current or would conduct only a nominal electrical current. Insulator 520 may be or form part of a printed wiring board or a printed circuit board. The different illustrative embodiments recognize that when currents are matched or substantially matched, magnetic fields surrounding the conductors and electrodes are reduced. When currents are matched as shown in here, the magnetic field surrounding battery 500 may be reduced by about 20-30dB.

Additionally, negative conductor 508 comprises devices 522. Devices 522 may comprise different components that manipulate the flow of current in negative conductor 508. For example, devices 522 may comprise switches, such as, but not limited to, a transistor, a field effect transistor, a metal-oxide semiconductor field effect transistor, a resettable fuse, a non-resettable fuse, a resettable thermal fuse, and/or a non-resettable thermal fuse. Devices 522 may divide negative conductor 508 into segments. Devices 522 may receive power from the current running through negative conductor 508 and/or through some other power source. Devices 522 may close a connection between the different segments of negative conductor 508 in response to a certain condition. For example, a metal-oxide semiconductor field effect transistor may be designed to block the flow of current if the voltage is too high or too low. In other embodiments, devices 522 may be located on positive conductor 506.

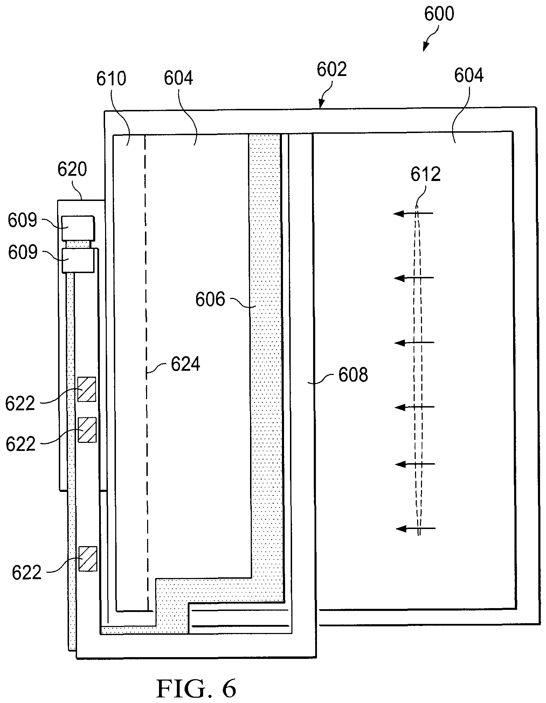

Turning now to FIG. 6, a schematic representation of a final layer of a battery jellyroll with a positive conductor and a negative conductor with an insulator is depicted in accordance with an illustrative embodiment. Battery 600 is an example of one implementation of battery system 202 in FIG. 2.

In this illustrative example, battery 600 comprises case 602, a jellyroll, layer 604, positive conductor 606, and negative conductor 608. Layer 604 is the last layer of a jellyroll. While it appears in FIG. 6 that layer 604 is a single layer, it is recognized that layer 604 may be representative of a plurality of layers, such as plurality of layers 256 of FIG. 2. The plurality of layers may comprise a positive electrode, negative electrode, and a separator. Additionally, while it appears in FIG. 6 that negative conductor 608 and positive conductor 606 are both connected to a single layer, it is recognized that negative conductor 608 and positive conductor 606 are connected to different layers. For example, positive conductor 606 may be connected to a positive electrode of layer 604. Positive conductor 606 and negative conductor 608 end at contact pads 609. Contact pads 609, part of positive conductor 606, part of negative conductor 608, and one or more devices 622 may be located on insulator 620. Insulator 620 is a material which would not conduct an electric current or would conduct only a nominal electrical current. Insulator 620 may be or form part of a printed wiring board or a printed circuit board.

Also, while it appears in FIG. 6 that negative conductor 608 and positive conductor 606 are side by side, it is recognized that negative conductor 608 and positive conductor 606 may also overlap. This presentation is shown as an illustrative embodiment. Also, while layer 604 appears to be a single rectangle, it is recognized that the edge at the right of the figure would wrap around underneath to the right to form the rest of the jellyroll and stops on the left side when it reaches end 624. Layer 610 is another layer and wraps around underneath to the left of the figure where it will eventually become layer 604. Layer 610 goes underneath layer 604 as it approaches end 624 to the right. Here, the jellyroll would have a vertical axis.

Layer 604 comprises positive currents 612. Positive currents 612 are just one illustration of the flow of currents. Layer 604 also comprises a plurality of layers. The plurality of layers may include, but are not limited to, a positive electrode, a separator, and a negative electrode. Positive currents 612 and the negative currents are in substantially opposite directions and substantially equal in magnitude throughout layer 604, which may also be referred to as electric currents "matching", "substantially matching", being "substantially matched", or being "matched". Alternatively, positive currents 612 or negative currents may be matched by themselves in an opposite direction. For example, a portion of a conductor with a negative current may be matched by a portion of the conductor in the opposite direction with the same negative current.

In these depicted examples, electric currents are matched because negative conductor 608 and positive conductor 606 are substantially symmetric across the negative and positive electrodes as negative conductor 608 and positive conductor 606 pull current from the positive and negative electrodes. The term "symmetric" is defined as being proximate to one another and similar in shape. When negative conductor 608 and positive conductor 606 are symmetric across the negative and positive electrodes, electric currents in the electrodes are pulled evenly to the negative conductor 608 and positive conductor 606 to keep the positive and negative currents matching. In different embodiments, negative conductor 608 and positive conductor 606 may be extended across the entire length of an end of layer 604, extended across a different side, and/or only a portion of an end of layer 604. Negative conductor 608 is connected to the negative electrode of layer 604 and positive conductor 606 is connected to the positive electrode of layer 604. Since the leading edge of negative conductor 608 and positive conductor 606 are extended across the entire length of the end of layer 604, the electric currents are pulled evenly across layer 604.

Additionally, negative conductor 608 comprises devices 622. Devices 622 may comprise different components that manipulate the flow of current in negative conductor 608. For example, devices 622 may comprise switches, such as, but not limited to, a transistor, a field effect transistor, a metal-oxide semiconductor field effect transistor, a resettable fuse, a non-resettable fuse, a resettable thermal fuse, and/or a non-resettable thermal fuse. Devices 622 may divide negative conductor 608 into segments. Devices 622 may receive power from conductor 606 and/or conductor 608 and/or through some other power source. Devices 622 may close a connection between the different segments of negative conductor 608 in response to a certain condition. For example, a metal-oxide semiconductor field effect transistor may be designed to block the flow of current if the voltage is too high or too low.

In reference to FIG. 7, a flowchart of a process for transmitting electricity is depicted in accordance with an illustrative embodiment. The process illustrated in FIG. 7 may be implemented in a device, such as user equipment 100 in FIG. 1 in which a battery, such as battery system 202 in FIG. 2 is used.

The process begins by directing a first current from a first electrode with a first portion of a first conductor (step 702). The process also provides directing a second current from a second electrode with a first portion of a second conductor (step 704). The first portion of the first conductor and the first portion of the second conductor are substantially symmetric and proximate. Additionally, the process provides carrying the first current with a second portion of the first conductor in a first direction along an insulator (step 706). Also, the process provides carrying the first current with a third portion of the first conductor in a second direction along an opposite side of the insulator from the second portion and proximate to the second portion (step 708). The second portion and the third portion are outside the case, and the first direction is substantially opposite from the second direction. Additionally, the first conductor and/or the second conductor may comprise one or more segments. One or more devices may be positioned between the one or more segments of at least one of the first conductor and the second conductor. The one or more devices may comprise one or more switches. The one or more switches may comprise at least one of a transistor, a field effect transistor, a metal-oxide semiconductor field effect transistor, a resettable fuse, a non-resettable fuse, a resettable thermal fuse, and/or a non-resettable thermal fuse.

Additionally, whereas the above mentioned battery design rules are discussed in connection with battery conductors that carry high currents, a person of skill in the art will understand that other battery conductors and terminals that do not draw any significant current do not need to adhere to the above mentioned design rules. For example, if the current is a small fraction (e.g. one-thirtieth to one-fortieth of the current of the high-current carrying conductors and terminals) it is not necessary to apply the foregoing design rules to such battery conductors and terminals. Also, whereas an exemplary embodiment of a lithium battery has been discussed above, the principles set forth herein apply to other batteries such as lithium ion polymer batteries, lithium ion prismatic batteries, lead acid batteries, nickel metal-hydride batteries, nickel cadmium batteries, alkaline batteries, or batteries yet to be designed.

All such embodiments and applications are believed to be within the scope of this disclosure in its broadest aspects and as set forth in the following claims.

## Claims

1. A method for making a battery (500) having low noise comprising:
directing a first current from a first electrode of a battery with a first portion of a first conductor (508);
directing a second current from a second electrode of the battery with a first portion of a second conductor (506), wherein the first portion of the first conductor and the first portion of the second conductor are substantially overlapping;
carrying the first current with a second portion of the first conductor (516) in a first direction; and
carrying the first current with a third portion of the first conductor (518) in a second direction, wherein the second portion and the third portion are outside a case of the battery, wherein the first direction is substantially opposite from the second direction, and wherein an insulator (520) separates the second portion and the third portion and at least one of the first conductor and the second conductor comprises one or more segments, further comprising:
positioning one or more devices (522) between the one or more segments of the second and third portions of the first conductor; wherein the second portion and the third portion are proximate.

2. The method of claim 1, wherein the insulator is part of a printed wiring board.

3. The method of claim 1, wherein the one or more devices comprises one or more switches.

4. The method of claim 1, wherein the one or more devices comprises at least one of a transistor, a field effect transistor, a metal-oxide semiconductor field effect transistor, a resettable fuse, a non-resettable fuse, a resettable thermal fuse, and a non-resettable thermal fuse.

5. A battery (500) comprising:
a case (502), the case including a first electrode and a second electrode;
a first conductor having a first portion (508) for directing the first current from the first electrode;
a second conductor having a first portion (506) for directing a second current from the second electrode, wherein the first portion of the first conductor and the first portion of the second conductor are substantially overlapping;
a second portion of the first conductor (516) for carrying the first current in a first direction;
a third portion of the first conductor (518) for carrying the first current in a second direction, wherein the second portion and the third portion are outside the case, wherein the first direction is substantially opposite from the second direction; and
an insulator (520), wherein the insulator is disposed between the second portion and the third portion and wherein at least one of the first conductor and the second conductor comprises one or more segments;
further comprising:
one or more devices (522), wherein the one or more devices are positioned between the one or more segments of the second and third portions of the first conductor; wherein the second portion and the third portion are proximate.

6. The battery of claim 5, wherein the insulator is part of a printed wiring board.

7. The battery of claim 5, wherein the one or more devices comprises one or more switches.

8. The battery of claim 5, wherein the one or more devices comprises at least one of a transistor, a field effect transistor, a metal-oxide semiconductor field effect transistor, a resettable fuse, a non-resettable fuse, a resettable thermal fuse, and a non-resettable thermal fuse.

## Patentansprüche

1. Verfahren zum Herstellen einer rauscharmen Batterie (500) enthaltend:
Leiten eines ersten Stroms von einer ersten Elektrode einer Batterie mit einem ersten Teil eines ersten Leiters (508);
Leiten eines zweiten Stroms von einer zweiten Elektrode der Batterie mit einem ersten Teil eines zweiten Leiters (506), wobei der erste Teil des ersten Leiters und der erste Teil des zweiten Leiters im Wesentlichen überlappen;
Transportieren des ersten Stroms mit einem zweiten Teil des ersten Leiters (516) in einer ersten Richtung; und
Transportieren des ersten Stroms mit einem dritten Teil des ersten Leiters (518) in einer zweiten Richtung, wobei der zweite Teil und der dritte Teil außerhalb eines Gehäuses der Batterie liegen, wobei die erste Richtung der zweiten Richtung im Wesentlichen entgegengesetzt ist, und wobei ein Isolator (520) den zweiten Teil und den dritten Teil trennt und mindestens einer des ersten Leiters und des zweiten Leiters ein oder mehrere Segmente aufweist, ferner enthaltend:
Positionieren einer oder mehrerer Einrichtungen (522) zwischen dem einen oder den mehreren Segmenten des zweiten und des dritten Teils des ersten Leiters; wobei der zweite Teil und der dritte Teil nahegelegen sind.

2. Verfahren nach Anspruch 1, wobei der Isolator Teil einer gedruckten Schaltung ist.

3. Verfahren nach Anspruch 1, wobei die eine oder die mehreren Einrichtungen einen oder mehrere Schalter umfassen.

4. Verfahren nach Anspruch 1, wobei die eine oder die mehreren Einrichtungen einen Transistor, einen Feldeffekttransistor, einen Metalloxidhalbleiter-Feldeffekttransistor, eine rückstellbare Sicherung, eine nicht rückstellbare Sicherung, eine rückstellbare Thermosicherung oder eine nicht rückstellbare Thermosicherung oder mehrere dieser Elemente umfassen.

5. Batterie (500), enthaltend:
ein Gehäuse (502), wobei das Gehäuse eine erste Elektrode und eine zweite Elektrode aufweist;
einen ersten Leiter, der einen ersten Teil (508) zum Leiten des ersten Stroms von der ersten Elektrode aufweist;
einen zweiten Leiter, der einen ersten Teil (506) zum Leiten eines zweiten Stroms von der zweiten Elektrode hat, wobei der erste Teil des ersten Leiters und der erste Teil des zweiten Leiters im Wesentlichen überlappen;
einen zweiten Teil des ersten Leiters (516) zum Transportieren des ersten Stroms in einer ersten Richtung;
einen dritten Teil des ersten Leiters (518) zum Transportieren des ersten Stroms in einer zweiten Richtung, wobei der zweite Teil und der dritte Teil außerhalb des Gehäuses liegen, wobei die erste Richtung der zweiten Richtung im Wesentlichen entgegengesetzt ist; und
einen Isolator (520), wobei der Isolator zwischen dem zweiten Teil und den dritten Teil angeordnet ist und wobei mindestens einer des ersten Leiters und des zweiten Leiters ein oder mehrere Segmente aufweist;
ferner enthaltend:
eine oder mehrere Einrichtungen (522), wobei die eine oder die mehreren Einrichtungen zwischen dem einen oder den mehreren Segmenten des zweiten und des dritten Teils des ersten Leiters positioniert sind; wobei der zweite Teil und der dritte Teil nahegelegen sind.

6. Batterie nach Anspruch 5, wobei der Isolator Teil einer gedruckten Schaltung ist.

7. Batterie nach Anspruch 5, wobei die eine oder die mehreren Einrichtungen einen oder mehrere Schalter umfassen.

8. Batterie nach Anspruch 5, wobei die eine oder die mehreren Einrichtungen einen Transistor, einen Feldeffekttransistor, einen Metalloxidhalbleiter-Feldeffekttransistor, eine rückstellbare Sicherung, eine nicht rückstellbare Sicherung, eine rückstellbare Thermosicherung oder eine nicht rückstellbare Thermosicherung oder mehrere dieser Elemente umfassen.

## Revendications

1. Procédé pour produire une batterie (500) peu bruyante, comprenant les opérations consistant à :
orienter un premier courant depuis une première électrode d'une batterie avec une première partie d'un premier conducteur (508) ;
orienter un deuxième courant depuis une deuxième électrode de la batterie avec une première partie d'un deuxième conducteur (506) ;
où la première partie du premier conducteur et la première partie du deuxième conducteur se chevauchent sensiblement ;
transporter le premier courant avec une deuxième partie du premier conducteur (516) dans une première direction ; et
transporter le premier courant avec une troisième partie du premier conducteur (518) dans une deuxième direction,
où la deuxième partie et la troisième partie sont en-dehors d'un boîtier de la batterie, où la première direction est pratiquement opposée à la deuxième direction, et où un isolateur (520) sépare la deuxième partie et la troisième partie et au moins l'un du premier conducteur et du deuxième conducteur comprend un ou plusieurs segments,
comprenant en outre l'opération consistant à positionner un ou plusieurs dispositifs (522) entre les un ou plusieurs segments des deuxième et troisième parties du premier conducteur ;
où la deuxième partie et la troisième partie sont proches.

2. Procédé selon la revendication 1, dans lequel l'isolateur fait partie d'une carte de circuit imprimé.

3. Procédé selon la revendication 1, dans lequel les un ou plusieurs dispositifs comprennent un ou plusieurs commutateurs.

4. Procédé selon la revendication 1, dans lequel les un ou plusieurs dispositifs comprennent au moins l'un parmi un transistor, un transistor à effet de champ, un transistor à effet de champ de type métal-oxyde-semiconducteur, un fusible réarmable, un fusible non réarmable, un fusible thermique réarmable, et un fusible thermique non réarmable.

5. Batterie (500) comprenant :
un boîtier (502), le boîtier comprenant une première électrode et une deuxième électrode ;
un premier conducteur ayant une première partie (508) pour diriger le premier courant depuis la première électrode ;
un deuxième conducteur ayant une première partie (506) pour diriger un deuxième courant depuis la deuxième électrode,
où la première partie du premier conducteur et la première partie du deuxième conducteur se chevauchent sensiblement ;
une deuxième partie du premier conducteur (516) pour transporter le premier courant dans une première direction ;
une troisième partie du premier conducteur (518) pour transporter le premier courant dans une deuxième direction,
où la deuxième partie et la troisième partie sont en-dehors du boîtier, où la première direction est pratiquement opposée à la deuxième direction ; et
un isolateur (520),
où l'isolateur est disposé entre la deuxième partie et la troisième partie et où au moins l'un du premier conducteur et du deuxième conducteur comprend un ou plusieurs segments ;
comprenant en outre un ou plusieurs dispositifs (522),
où les un ou plusieurs dispositifs sont positionnés entre les un ou plusieurs segments des deuxième et troisième parties du premier conducteur ; où la deuxième partie et la troisième partie sont proches.

6. Batterie selon la revendication 5, dans laquelle l'isolateur fait partie d'une carte de circuit imprimé.

7. Batterie selon la revendication 5, dans laquelle les un ou plusieurs dispositifs comprennent un ou plusieurs commutateurs.

8. Batterie selon la revendication 5, dans laquelle les un ou plusieurs dispositifs comprennent au moins l'un parmi un transistor, un transistor à effet de champ, un transistor à effet de champ de type métal-oxyde-semiconducteur, un fusible réarmable, un fusible non réarmable, un fusible thermique réarmable, et un fusible thermique non réarmable.
